# EUROPÄISCHE PATENTSCHRIFT

(11) **EP 2 910 086 B1**
(45) Veröffentlichungstag und Bekanntmachung des Hinweises auf die Patenterteilung: **13.12.2017**
(21) Anmeldenummer: 13776457.7
(22) Anmeldetag: 09.10.2013
(51) Int. Cl.: H05B 7/144, G05F 1/20

(54) **VORRICHTUNG UND VERFAHREN ZUR REGELUNG EINES LICHTBOGENOFENS IN DER ANFANGSPHASE EINES SCHMELZPROZESSES**
DEVICE AND METHOD FOR CONTROLLING AN ELECTRIC ARC FURNACE IN THE INITIAL PHASE OF A MELTING PROCESS
DISPOSITIF ET PROCÉDÉ DE RÉGLAGE D'UN FOUR À ARC ÉLECTRIQUE DANS LA PHASE INITIALE D'UN PROCESSUS DE FUSION

(30) Priorität: 16.10.2012 DE 102012109844
(43) Veröffentlichungstag der Anmeldung: 26.08.2015
(73) Patentinhaber: Maschinenfabrik Reinhausen GmbH, 93059 Regensburg (DE)
(72) Erfinder: KRÜGER, Klaus, 83416 Saaldorf-Surheim (DE); DOHNAL, Dieter, 93138 Lappersdorf (DE); VIERECK, Karsten, 93059 Regensburg (DE); BABIZKI, Alexei, 93049 Regensburg (DE)
(86) Internationale Anmeldenummer: PCT/EP2013/071043
(87) Internationale Veröffentlichungsnummer: WO 2014/060262

(56) Entgegenhaltungen:
- WO-A2-02/063927
- WO-A2-2012/104232
- DE-A1-102009 053 169
- DE-C2- 3 512 189
- US-A1- 2011 216 802

## Beschreibung

Die Erfindung betrifft eine Vorrichtung zur Regelung eines Lichtbogenofens in der Anfangsphase eines Schmelzprozesses. Im Besonderen sieht hierzu die Vorrichtung drei Stränge mit jeweils einer Elektrode und einer zugeordneten Außenleitung zur Energiezuführung vor. In jedem Strang sind ein Sensor zur Messung der aktuellen Spannung und ein Sensor zur Messung des aktuell fließenden Stroms vorgesehen. Mit einer Steuer- und Regeleinheit wird für jeden Strang eine zeitabhängige elektrische Ist-Größe berechnet. Ferner ist mindestens ein Ofentransformator mit einer Primärseite und einer Sekundärseite vorgesehen. Ein Laststufenschalter schaltet die Wicklungsanzapfungen der Primärseite und die drei Elektroden sind mit der Sekundärseite des mindestens einen Ofentransformators elektrisch verbunden.

Ferner betrifft die Erfindung ein Verfahren zur Regelung eines Lichtbogenofens in der Anfangsphase eines Schmelzprozesses.

Die deutsche Patentschrift DE 35 12 189 C1 offenbart ein Verfahren und eine Vorrichtung zur Regelung von Lichtbogenöfen. Dabei soll eine exakte, wirtschaftliche und technisch ohne großen Aufwand realisierbare Einstellung der Lichtbogenspannung und der Elektrodenhöhenstandsstellung ermöglicht werden. Das Stellglied Transformatorspannung wird stets von einem Stromregelkreis angesteuert, dem im Fall einer Leistungsregelung ein Leistungsregelkreis überlagert ist. Der dem Stromregler überlagerte Leistungsregler liefert dann die Führungsgröße für den Stromregler. Auf die Elektrodenverstellung wirkt in allen Fällen unmittelbar nur der Lichtbogenspannungsregler ein. Somit ergibt sich für den verwendeten Stufenschalterantrieb des Transformators entweder die Möglichkeit, die Transformatorspannung direkt über eine Sollwertvorgabe zuzuführen oder über den Stufenschalter mittels des genannten Stromreglers, dem ggf. ein Leistungsregler überlagert ist, einzustellen. Der Hubantrieb wird über einen Spannungsregler betätigt, wobei die betreffende Steuerspannung entweder aus einem Stromregler oder aus einem Verschleißregler oder direkt als vorgegebene Sollgröße geliefert wird.

Die europäische Patentanmeldung EP 2 362 710 A1 offenbart einen Lichtbogenofen und ein Verfahren zum Betrieb eines Lichtbogenofens. Der der wenigstens einen Elektrode zugeordnete Lichtbogen weist eine erste Strahlungsleistung auf, die sich auf Grundlage eines ersten eingestellten Betriebsparametersatzes ergibt. Der Lichtbogenofen wird gemäß einem vorgegebenen Fahrprogramm betrieben, das auf einem erwarteten Prozessverlauf beruht. Es wird überwacht, ob zwischen dem tatsächlichem Prozessverlauf und dem erwarteten Prozessverlauf eine unerwünschte Abweichung vorliegt. Bei Vorliegen einer Abweichung wird eine geänderte zweite Strahlungsleistung vorgegeben. Anhand der geänderten zweiten Strahlungsleistung wird ein geänderter zweiter Betriebsparametersatz ermittelt. Das Verfahren erlaubt eine möglichst geringe Einschmelzdauer bei einer Schonung der Betriebsmittel, insbesondere der Lichtbogenofenkühlung, zu erzielen. Die internationale Anmeldung WO 02 / 06 39 27 A2 beschreibt ein Leistungssteuerungssystem für einen wechselstrombetriebenen Lichtbogenofen, das zwischen der Wechselstromquelle und jeder Elektrode jeweils eine regelbaren Reaktanz und einen regelbaren Lichtbogentransformator umfasst und diese steuert. Die regelbare Reaktanz besteht aus einer ersten Drossel und einer parallel dazu geschalteten Reihenschaltung aus einer zweiten Drossel und einem gegensinnig geschaltetem Thyristorpaar. Die Reaktanz wird mittels einer Reaktanzsteuerung gesteuert, indem die Thyristoren gezielt den durchfließenden Strom ein- und ausschalten und dabei auf die durch den Einschmelzprozess verursachten Blindleistungs- und Wirkleistungsschwankungen reagieren und kompensieren. Jeder Elektrode sind ein Stromsensor und ein Spannungssensor zugeordnet. Das Leistungssteuerungssystem regelt die Reaktanz, die Stufenstellung des Lichtbogentransformators und die Höhe der Elektroden. Der Stufenschalter wählt und beschaltet die einzelnen Anzapfung.

Die deutsche Offenlegungsschrift DE 35 43 773 A1 beschreibt ein Verfahren zum Betrieb eines Lichtbogenofens, so dass bei stark schwankenden Rohmaterialien ein Einschmelzen dieses Materials mit einem minimalen Wert des bezogenen elektrischen Energieverbrauches möglich ist. Der Ofentransformator ist mit einem Lastschalter versehen und die Ausgangsspannung an der Sekundärseite des Transformators ist somit einstellbar. Die Steuerung erfolgt durch Ändern der Abgriffe des Ofentransformators oder durch Anheben und Absenken der Bogenelektroden mittels einer Elektrodenhubvorrichtung des Lichtbogenofens, um die Länge des Lichtbogens zu ändern. Gleichzeitig wird die Stärke des von der Sekundärseite des Ofentransformators zur Lichtbogenelektrode fließenden elektrischen Stromes gemessen. Wird der Lichtbogenofen mit einem elektrischen Strom betrieben, der auf diese Weise gesteuert ist, dann wird der elektrische Energieverbrauch bei dem Einschmelzprozess erniedrigt und es kann der bezogene elektrische Energieverbrauch minimal gehalten werden.

Die deutsche Patentanmeldung DE 10 2009 017 196 A1 offenbart einen Stufenschalter mit Halbleiter-Schaltelementen zur unterbrechungslosen Umschaltung zwischen festen Stufenschalterkontakten, die mit Wicklungsanzapfungen eines Stufentransformators elektrisch verbunden sind. Dabei ist jeder der festen Stufenschalterkontakte direkt oder, während der Umschaltung, über die zwischengeschalteten Halbleiter-Schaltelemente mit einer Lastableitung verbindbar. Die Lastableitung weist feste, geteilte Ableitkontaktstücke auf, damit die Halbleiter-Schaltelemente im stationären Betrieb von der Transformatorenwicklung galvanisch getrennt sind. Für Stufenschalter mit Halbleiter-Schaltelementen hingegen ergeben sich verschiedene Nachteile. Durch das dauerhafte Anliegen der Betriebsspannung und die Beanspruchung der Leistungselektronik durch Blitzstoßspannung sind hohe Isolationsabstände erforderlich, was unerwünscht ist.

Wie aus dem Stand der Technik bekannt, sind die elektrischen Elemente für eine Steuerung bzw. Regelung des Lichtbogenofenbetriebs ein Ofentransformator, eine Drosselspule und ein Elektrodentragarmsystem. Die Energiebereitstellung für die Drehstromlichtbogenöfen erfolgt über Ofentransformatoren mit einem integrierten Stufenschalter. Durch die Transformatorstufen kann der entsprechende Energieeintrag eingestellt werden.

Eine unter Last schaltbare Drosselspule, die dem Transformator vorgeschaltet ist, dient zur Regelung der Reaktanz des Stromkreises und ermöglicht dadurch einen Ofenbetrieb mit stabilen Lichtbögen sowie eine Begrenzung des Kurzschlussstroms. In abhängig vom Prozessfortschritt wird die geeignete Stufe sowohl beim Transformator als auch bei der Seriendrossel ausgewählt. Dies kann durch einen manuellen Eingriff des Ofenbedieners oder durch eine integrierte Steuerung oder Regelung erfolgen.

Bei der manuellen Steuerung kann ein erfahrener Ofenbediener anhand der Farbe vom Ofenkessel und dessen Inhaltes den aktuellen Energieeintrag feststellen. So kann der Ofenzustand und der Einschmelzprozess subjektiv beobachtet werden. Bei kritischen Situationen (z.B. Beschädigung vom Feuerfest) wird die Transformatorstufe angepasst.

Bei der automatischen Steuerung werden die Transformatorstufen und ggf. die Drosselstufen abhängig vom aktuellen Energieeintrag angepasst. Grundsätzlich wird in der Anfangsphase "Bohrphase" eine hohe Induktivität benötigt, um den Lichtbogen möglichst stabil zu halten (OLTC Drossel == höchste Stufe). In der letzten Phase "flüssiges Bad" wird die Seriendrossel ausgeschaltet, um die Blindleistung zu reduzieren.

In der Bohrphase wird eine niedrigere Spannungsstufe (kurze Lichtbogen) gewählt, um die feuerfeste Auskleidung des Ofens (Feuerfest) sowie den Ofendeckel zu schonen. Nachdem der Lichtbogen von der schäumenden Schlacke eingehüllt ist, wird die höchste Spannungsstufe gewählt, um den größten Energieeintrag in die Schmelze zu erreichen. In der letzten Phase wird eine etwas niedrigere Stufenspannung gewählt, dafür wird ein maximal hoher Strom eingestellt, um den hohen Energieeintrag zu gewährleisten.

Die oben erwähnten Vorgaben bilden, insbesondere bei den manuellen und automatischen Steuerungen, den tatsächlichen Prozesszustand nur sehr unzureichend ab. Auch die neuesten Regelungen sind ebenfalls nicht in der Lage auf die schnellen Veränderungen im System mit den geeigneten Zeitkonstanten (z.B. im Millisekundenbereich) zu reagieren.

Hinsichtlich der Stufenschalter in Ofentransformatoren und Drosselspulen werden die hohen Schalthäufigkeiten je nach verschiedensten Schaltstrategien der Kunden als ein technischer Stressfaktor betrachtet. Es ist in erster Linie auf Kontaktabbrand sowie Abnutzung der mechanischen Bauteile in den Stufenschaltern zurückzuführen.

Da die Wartungsarbeit an Stufenschaltern in der Regel einen hohen Aufwand und vor allem kostenintensive Produktionsunterbrechung bedeutet, ist es für die Betreiber durchaus wünschenswert, das Wartungsintervall zu verlängern, um den Wartungsaufwand des Stufenschalters möglichst zu verringern.

Es ist Aufgabe der Erfindung, eine Vorrichtung zur Regelung eines Lichtbogenofens in der Anfangsphase eines Schmelzprozesses zu schaffen, die eine schnelle Spannungsanpassung ermöglicht, um einen Überstromfall zu vermeiden.

Die Aufgabe wird durch eine Vorrichtung zur Regelung eines Lichtbogenofens in der Anfangsphase eines Schmelzprozesses gelöst, die die Merkmale des Anspruchs 1 umfasst.

Eine weitere Aufgabe der Erfindung ist, ein Verfahren zur Regelung eines Lichtbogenofens in der Anfangsphase eines Schmelzprozesses zu schaffen, die eine schnelle Spannungsanpassung ermöglicht, um einen Überstromfall zu vermeiden.

Die Aufgabe wird durch ein Verfahren zur Regelung eines Lichtbogenofens in der Anfangsphase eines Schmelzprozesses gelöst, das die Merkmale des Anspruchs 3 umfasst.

Die erfindungsgemäße Vorrichtung zur Regelung eines Lichtbogenofens in der Anfangsphase eines Schmelzprozesses zeichnet sich dadurch aus, dass der Laststufenschalter ein Halbleiterstufenschalter ist, der eine Taktzeit von einigen Millisekunden ermöglicht. Gerade in der Anfangsphase des Schmelzprozesses kommt es durch das Zusammenfallen des Schrotthaufens um die Elektroden zu Kurzschlüssen, die hohe Überströme verursachen. Diese Überströme gilt es durch eine sich dauernd anpassende Versorgungen der Elektroden mit elektrischer Energie zu vermeiden bzw. auf ein Maß zu reduzieren, so dass keine Beschädigungen des Lichtbogenofens bzw. des Feuerfests hervorgerufen wird.

Gemäß einer Ausführungsform, umfasst die Steuer- und Regeleinheit die Steuer- und Regeleinheit einen Regelalgorithmus, mit dem eine Soll-Stellung des Halbleiterstufenschalters berechenbar ist. Die Soll-Stellung des Halbleiterstufenschalters ermöglicht die Einstellung eines Stromgrenzwerts, wobei die Soll-Stellung in Abhängigkeit von den Messgrößen der Sensoren eines jeden Strangs und den jeweils resultierenden elektrischen Ist-Größen der jeweilige Stromgrenzwert berechenbar ist. Mit dem Halbleiterstufenschalter kann dann auf die einer Soll-Wicklungsanzapfung entsprechenden Soll-Stellung geschaltet werden.

Das erfindungsgemäße Verfahren zeichnet sich dadurch aus:
- dass eine Strom- und Spannungsmessung für einen jeden der drei Stränge einer Sekundärseite eines Ofentransformators durchgeführt wird;
- dass ausgehend von den in einer Steuer- und Regeleinheit vorgegebenen Betriebsparametern mit einem Regelalgorithmus eine geeignete Soll-Außenleiterspannung und eine entsprechend zugeordnete Soll-Wicklungsanzapfung einer Primärseite des Ofentransformators berechnet wird, damit eine Strom-Obergrenze eingehalten wird; und;
- dass die einzustellende Soll-Wicklungsanzapfung auf der Primärseite des Ofentransformators mit einem Halbleiterstufenschalter für alle Stränge des Lichtbogenofens symmetrisch erfolgt und der Halbleiterstufenschalter auf die entsprechende Soll-Stellung schaltet.
-

Unter den vorgegebenen Betriebsparametern eines Lichtbogenofens versteht man die elektrischen Größen, wie z.B. Spannung, Stromstärke und Impedanz in den Strängen und auch die Beschaltung der Wicklungsanzapfungen des Ofentransformators beim Anfahren des Lichtbogenofens.

Die elektrische Ist-Größe wird derart berechnet, dass aus den Strängen derjenige mit einem Extremum der elektrischen Ist-Größe ausgewählt wird. Anschließend wird verglichen, ob das Extremum der elektrischen Ist-Größe kleiner ist als ein Grenzwert der elektrischen Ist-Größe. Die elektrische Ist-Größe kann eine Impedanz oder eine Admittanz sein. Weitere charakterisierende elektrische Ist-Größen sind denkbar. Die Benutzung von Impedanz oder Admittanz sollte keine Beschränkung der Erfindung darstellen.

Für gewöhnlich liegt eine Taktzeit für die Bestimmung der Soll-Stellung des Halbleiterstufenschalters und der entsprechenden Schaltung auf die Soll-Wicklungsanzapfung am Ofentransformator im Bereich von 20 ms.

Zur Bestimmung der elektrischen Größen wird eine an eine Regeldynamik angepasste Tiefpassfilterung durgeführt. Die Anpassung der Außenleiterspannungen auf der Sekundärseite des Ofentransformators kann auch asymmetrisch durchgeführt werden.

Für den Fall, dass die elektrische Ist-Größe die Impedanz ist, wird der Impedanzgrenzwert mit dem Halbleiterstufenschalter dadurch beseitigt, dass dieser auf die kleinstmögliche Wicklungsanzapfung der Primärseite des Ofentransformators schaltet. Dadurch wird die Spannung auf der Sekundärseite des Ofentransformators reduziert. Die Reduzierung der Spannung auf der Sekundärseite des Ofentransformators wird spezifisch in jedem einzelnen Strang durchgeführt.

Diese und andere Merkmale und Vorteile der verschiedenen hier offenbarten Ausführungsformen werden mit Bezug auf die folgende Beschreibung und die Zeichnungen besser verständlich, wobei gleiche Bezugszeichen durchweg gleiche Elemente bezeichnen. Es zeigen:
Figur 1 eine schematische Darstellung eines Systems mit zur Schmelzen von Metall mittels eines Lichtbogenofens ;
Figur 2 eine schematische Darstellung der Einbindung der Regelung eines Lichtbogenofens in der Anfangsphase des Schmelzprozesses in die Gesamtregelung des Lichtbogenofens;
Figur 3 eine schematische Ansicht des Ablaufdiagramms der Regelung eines Lichtbogenofens in der Anfangsphase des Schmelzprozesses; und
Figur 4 eine graphische Darstellung des Unterschieds der Wicklungsanzapfungen in Abhängigkeit vom Unterschied der bestimmten Impedanz.

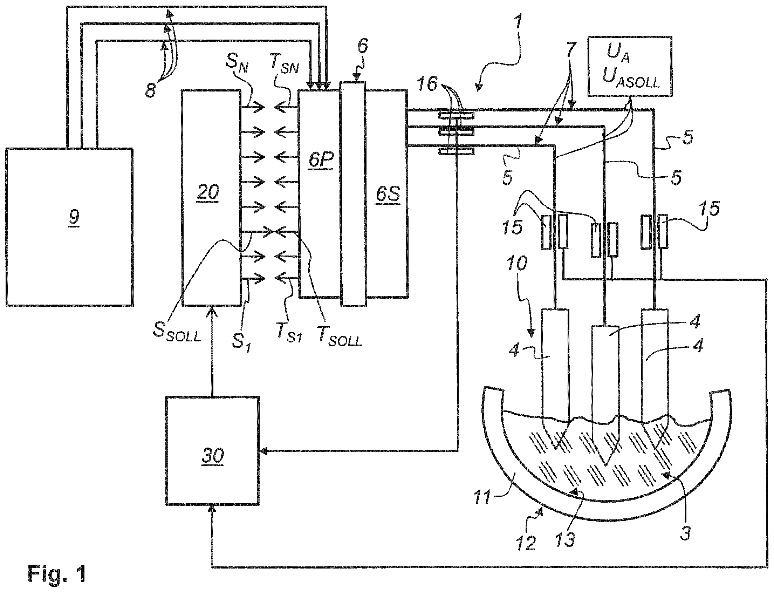

Figur 1 zeigt eine schematische Darstellung eines Systems 1 zum Schmelzen von Metall mittels eines Lichtbogenofens 10. Der Lichtbogenofens 10 besteht aus einem Ofengefäß 11, in dem Stahlschrott eingeschmolzen und daraus eine Schmelze 3 erzeugt wird. Das Ofengefäß 11 ist noch mit einem Deckel (nicht dargestellt versehen). Die Wandung 12 und Deckel sich mit einer Wasserkühlung versehen. Je nach Betriebsart des Lichtbogenofens 10 hat dieser eine oder drei Elektroden 4. Bei einem Gleichstrom-Elektrolichtbogenofen wird eine Elektrode 4 verwendet. Bei einem Drehstrom-Lichtbogenofen 10 werden drei Elektroden 4 verwendet. Die nachlogende Beschreibung schildert das Prinzip der Erfindung am Beispiel eines Drehstrom-Lichtbogenofens. Ein Feuerfestmaterial (nicht dargestellt) kleidet eine Innenwandung 13 des Lichtbogenofens 10 aus.

Die Elektroden 4 sind an einem Haltearm (nicht dargestellt) angebracht und können bei Bedarf in das Ofengefäß 11 eingefahren werden. Jede der Elektroden 4 ist mit einer Außenleitung 5 ausgestattet, die alle mit einer Sekundärseite 6S eines Ofentransformators 6 verbunden sind. Die Außenleitung 5 und die Elektrode 4 bilden somit eine Phase bzw. einen Strang 7 des Drehstromkreises. Eine Primärseite 6P des Ofentransformators 6 wird aus einem Energieversorgungsnetz 9 mit der erforderlichen Hochspannung versorgt. Mit der Primärseite 6P des Ofentransformators 6 ist ein Laststufenschalter 20 verbunden, der als Halbleiterstufenschalter ausgebildet ist.

Eine Steuer- und Regeleinheit 30 wirkt mit dem Halbleiterstufenschalter 20 zusammen, um Wicklungsanzapfungen T_{S1},...,T_{SN} des Ofentransformators 6 auf der Primärseite 6P derart zu schalten, dass diese mit einer entsprechenden Spannung und einem entsprechenden Strom versorgt werden, dass eine vorbestimmte elektrische Ist-Größe Eᵢₛₜ in den Strängen 7 vorherrscht. Die elektrische Ist-Größe Eᵢₛₜ kann z.B. eine Impedanz Z oder eine Admittanz Y sein. Die Primärseite 6P des Ofentransformators 6 hat mehrere Wicklungsanzapfungen T_{S1},...,T_{SN}, die von den Halbleiterschaltelementen S₁,..., S_{N} des Halbleiterstufenschalters 20 beschaltet werden. Die Steuer- und Regeleinheit 30 erhält Input von Stromsensoren 15 und Spannungssensoren 16, die den Strängen 7 des Lichtbogenofens10 zugeordnet sind. Aus den Eingangsdaten ermittelt die Steuer- und Regeleinheit 30 den Schaltablauf des Halbleiterstufenschalters 20 und die erforderliche Beschaltung der Wicklungsanzapfungen T_{S1},...,T_{SN} der Primärseite 6A des Ofentransformators 6, so dass der Strom in den Strängen 7 bzw. in einem spezifischen Strang 7 begrenzt wird. Die Stromsensoren 15 und die Spannungssensoren 16 können auch in Zuleitungen 8 zur Primärseite 6P des Ofentransformators 6 vorgesehen sein.

In der Anfangsphase des Schmelzprozesses im Lichtbogenofen 10 treten starke Strom- bzw. Spannungsschwankungen auf. Es kommt oft zu Kurzschlüssen und im Allgemeinen zu deutlich überhöhten Strömen führen. Die hängt mit lokal zusammenbrechenden Schrotthaufen zusammen. Diese Situation kann deutlich mit Hilfe des erfindungsgemäßen und schnellen Halbleiterstufenschalters 10 entschärft werden. Der Halbleiterstufenschalters 10 schaltet in äußersten Fall auf die kleinstmögliche Wicklungsanzapfung T_{S1} (bzw. Transformatorstufe), so dass daraus die niedrigste Spannung des Ofentransformators 6 resultiert. Dieser Vorgang kann auch unsymmetrisch also spezifisch für jeden Strang 7erfolgen. Ferner eröffnet der Halbleiterstufenschalter 20 die Möglichkeit, dass direkt auf kleinstmögliche Wicklungsanzapfung T_{S1} geschaltet wird, ohne dass dazwischenliegende Wicklungsanzapfungen der Reihe nach beschaltet werden müssen.

Die Steuer- und Regeleinheit 30 hat einen Regelalgorithmus implementiert, mit dem eine Soll-Stellung S_{SOLL} des Halbleiterstufenschalters 20 berechnet wird. Damit kann ein Stromgrenzwert I_{Grenz} eingestellt werden, wobei die Soll-Stellung S_{SOLL} des Halbleiterstufenschalters 20 in Abhängigkeit von den Messgrößen der Sensoren 15, 16 eines jeden Strangs 7 und den jeweils resultierenden elektrischen Ist-Größen Eᵢₛₜ der jeweilige Stromgrenzwert I_{Grenz} berechenbar ist. Mit dem Halbleiterstufenschalter 20 wird auf die einer Soll-Wicklungsanzapfung T_{SOLL} entsprechende Soll-Stellung S_{SOLL} geschaltet.

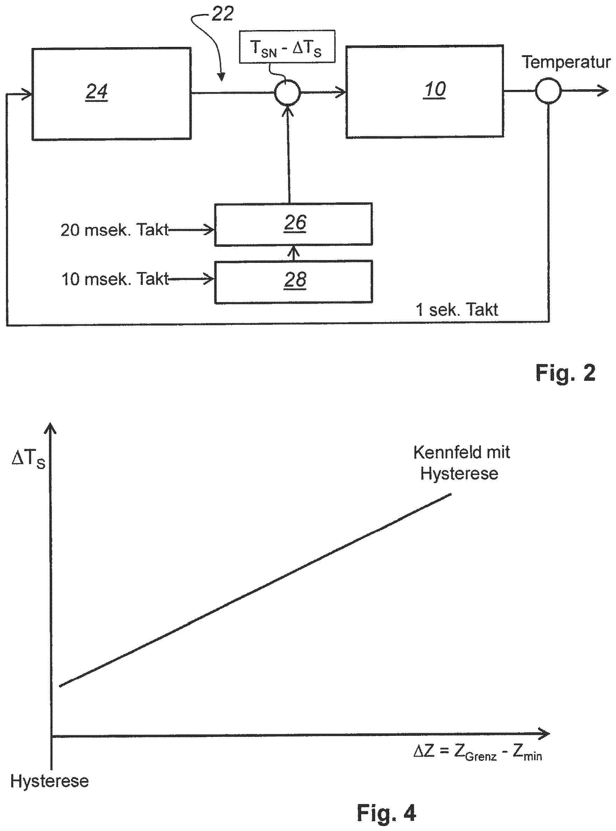

Figur 2 zeigt eine schematische Darstellung der Einbindung einer Regelung eines Lichtbogenofens 10 in der Anfangsphase eines Schmelzprozesses in die Gesamtregelung 22 des Lichtbogenofens 10. Die Gesamtregelung 22 des Lichtbogenofens 10 wird letztendlich über den Halbleiterstufenschalter 20 realisiert. Eine thermisch basierte Leistungsregelung 24 arbeitet mit einer Taktfrequenz im Bereich von 1 Sekunde. Die Überstromregelung 26 arbeitet mit einer Taktfrequenz im Bereich von 20 Millisekunden. Die Flicker-Regelung 28 arbeitet mit einer Taktfrequenz im Bereich von 10 Millisekunden. Die Taktfrequenz entspricht für jede der Regelungen der Widerholrate der entsprechenden Regelungen. Als Ergebnis der Messungen kann dann mittels des Halbleiterstufenschalters 20 von auf diejenige Wicklungsanzapfung T_{S1}...T_{SN} an einer Primärseite 6P des Ofentransformators 6 umgeschaltet werden, damit die erforderliche Regelung des Lichtbogenofens 10 derart erfolgt, dass Überströme minimiert bzw. ausgeschaltet werden. Die Regelung der Leistung des Lichtbogenofens 10 in Bezug auf den auftretenden Überstrom, kann mit dem Halbleiterschalter 20 symmetrisch oder unsymmetrisch erfolgen. Unter einer unsymmetrischen Regelung des Lichtbogenofens 10 in der Anfangsphase eines Schmelzprozesses versteht man eine nicht gekoppelte Veränderung der geregelten Spannungen an den Außenleitungen 5. Wie bereits erwähnt liegt dabei die Taktfrequenz in einer Größenordnung von 20ms.

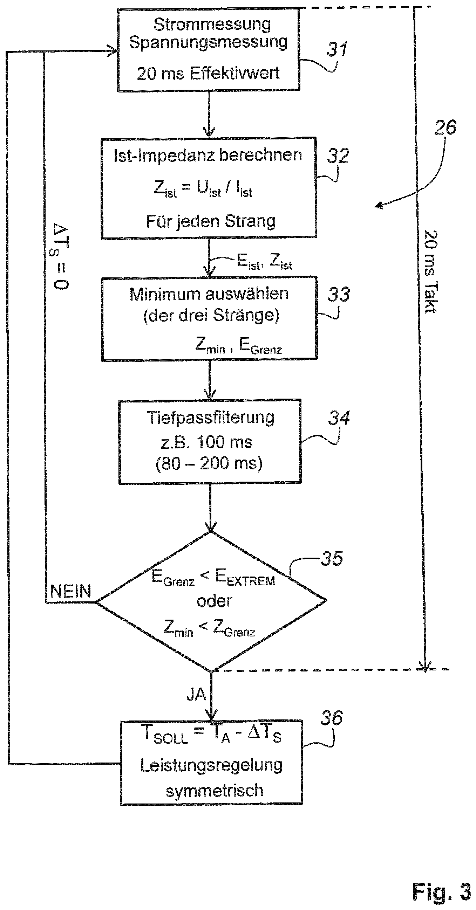

In Figur 3 ist eine schematische Ansicht eines Ablaufdiagramms der Regelung eines Lichtbogenofens 6 in der Anfangsphase des Schmelzprozesses dargestellt. Bei dieser Regelung handelt es sich um eine Überstromregelung 26, mit der es möglich ist, auf die schnellen Stromänderungen in der Anfangsphase des Schmelzprozesses zu reagieren. Die nachfolgende Beschreibung behandelt als elektrische Größe die Impedanz Z. Dies soll in keinster Weise als Beschränkung der Erfindung aufgefasst werden. Dabei soll, wie in Figur 4 dargestellt ist, nicht auf jede Stromänderungen mit einer Umschaltung der Wicklungsanzapfungen T_{S1}...T_{SN} durch den Halbleiterstufenschalter 20 reagiert werden. Sollte eine gemessene Impedanz Zᵢₛₜ für ein bestimmtes Zeitinterwall unter dem Impedanzgrenzwert Z_{Grenz} liegen, ist ein Eingriff mit dem Halbleiterstufenschalter 20 erforderlich. Der Überstrom wird dadurch beseitigt, dass der Halbleiterstufenschalter 20 auf die kleinstmögliche Wicklungsanzapfung T_{S1} oder auf T_{SOLL} schaltet.

Bei dem in Figur 3 dargestellten Verfahren werden in einem ersten Schritt 31 eine Strom- und die Strangspannungsmessung durchgeführt und der aktuelle Strom lᵢₛₜ und die aktuelle Spannung Uᵢₛₜ bestimmt. Hierzu sind, wie in Figur 1 dargestellt, entsprechende Strom- und Spannungssensoren 15 und 16 in jedem Strang 7 vorgesehen. In einem zweiten Schritt 32 wird für jeden Strang 7 eine aktuelle Impedanz Zᵢₛₜ berechnet wird. In einem dritten Schritt 33 wird aus den Strängen 7 derjenige mit der niedrigsten Impedanz Zₘᵢₙ ausgewählt. Zur Bestimmung des Strangs 7 mit der niedrigsten Impedanz Zₘᵢₙ wird eine Tiefpassfilterung 34 der Werte der niedrigsten Impedanz Zₘᵢₙ für alle Stränge 7 durchgeführt. In einem Vergleichsschritt 35 wird geprüft, ob die niedrigste Impedanz Zₘᵢₙ kleiner ist als ein Impedanzgrenzwert Z_{Grenz}.

Nun kann in einem letzten Schritt 36 der höchste Strom, respektive die niedrigste Impedanz Zₘᵢₙ berechnet werden. Mit Hilfe eines Kennlinienreglers kann die benötigte Differenz der Wicklungsanzapfung ΔTₛ berechnet werden, die von der Grenzimpedanz Z_{Grenz} und der gemessenen minimalen Impedanz Zₘᵢₙ abhängt. Dieses ΔTₛ wird von der aktuellen Wicklungsanzapfung T_{A} (Transformatorstufe) subtrahiert. Eine einzustellende Stufe T_{S} auf der Primärseite 6P des Ofentransformators 6 ergibt sich aus einer Differenz zwischen einer aktuellen Wicklungsanzapfung T_{A} auf der Primärseite 6P des Ofentransformators 6 und dem Unterschied der Wicklungsanzapfungen ΔT_{S} auf der Primärseite 6P des Ofentransformators 6. Eine Leistungsregelung des Ofentransformators 6 auf die einzustellende Wicklungsanzapfung T_{S} der Primärseite 6P erfolgt mit dem Halbleiterstufenschalter 20 für alle Stränge 7 des Lichtbogenofens 10 symmetrisch. Die Taktfrequenz liegt dabei in einer Größenordnung von 20 ms.

Die aktuelle Impedanz Zᵢₛₜ wird unter dem Impedanzgrenzwert Z_{Grenz} mit dem Halbleiterstufenschalter 20 dadurch gebracht, dass dieser auf die kleinstmögliche Wicklungsanzapfung der Primärseite 6P des Ofentransformators 6 schaltet. Somit wird die Spannung auf der Sekundärseite 6S des Ofentransformators 6 reduziert. Die Reduzierung der Spannung auf der Sekundärseite 6S des Ofentransformators 6 kann spezifisch in jedem einzelnen Strang 7 durchgeführt werden.

Die Erfindung wurde in Bezug auf zwei Ausführungsformen beschrieben. Es ist jedoch für einen Fachmann selbstverständlich, dass Änderungen und Abwandlungen der Erfindung gemacht werden können, ohne dabei den Schutzbereich der nachstehenden Ansprüche zu verlassen.

### Bezugszeichenliste

- Nr.: Bezeichnung
- 1: Vorrichtung
- 3: Schmelze
- 4: Elektrode
- 5: Außenleitung
- 6: Ofentransformator
- 6P: Primärseite
- 6S: Sekundärseite
- 7: Strang, Phase
- 8: Zuleitungen
- 9: Energieversorgungsnetz
- 10: Lichtbogenofen
- 11: Ofengefäß
- 12: Außenwandung
- 13: Innenwandung
- 15: Stromsensor
- 16: Spannungssensor
- 20: Laststufenschalter, Halbleiterstufenschalter
- 22: Gesamtregelung
- 24: Thermisch basierte Leistungsregelung
- 26: Überstromregelung
- 28: Flicker-Regelung
- 30: Steuer- und Regeleinheit
- 31: erster Schritt
- 32: zweiter Schritt
- 33: dritter Schritt
- 34: Tiefpassfilterung
- 35: Vergleichsschritt
- 36: letzter Schritt
- T_{S1}... T_{SN}: Wicklungsanzapfung, Transformatorstufe
- T_{A}: aktuelle Wicklungsanzapfung
- T_{SOLL}: Soll-Wicklungsanzapfung
- ΔT_{S}: Unterschied der Wicklungsanzapfungen
- S₁...S_{N}: Halbleiterschaltelement
- S_{SOLL}: Soll-Stellung
- Eᵢₛₜ: elektrische Ist-Größe
- E_{EXTREM}: Extremum der elektrischen Ist-Größe
- E_{Grenz}: Grenzwert der elektrischen Ist-Größe
- I_{MAX}: Strom-Obergrenze
- I_{Grenz}: Stromgrenzwert
- U_{ASOLL}: Soll-Außenleiterspannung
- Y: Admittanz
- Z: Impedanz
- Z_{Grenz}: Impedanzgrenzwert
- Z_{Min}: minimalen Impedanz
- Zᵢₛₜ: aktuelle Impedanz

## Patentansprüche

1. Vorrichtung zur Regelung eines Lichtbogenofens (10) in der Anfangsphase eines Schmelzprozesses, umfassend
- drei Stränge (7) mit jeweils einer Elektrode (4) und einer zugeordneten Außenleitung (5) zur elektrischen Energiezuführung, wobei in jedem Strang (7) ein Sensor (16) zur Messung der aktuellen Spannung und ein Sensor (15) zur Messung des aktuell fließenden Stroms vorgesehen ist;
- eine Steuer- und Regeleinheit (30), mit der für jeden Strang (7) zeitabhängig eine elektrische Ist-Größe (Eist) berechenbar ist;
- mindestens einen Ofentransformator (6) mit einer Primärseite (6P) und einer Sekundärseite (6S);
- mindestens einen Laststufenschalter (20), der Wicklungsanzapfungen (TS1, ..., TSN) der Primärseite (6P) schaltet, wobei die drei Elektroden (4) mit der Sekundärseite (6S) elektrisch verbunden sind,
**dadurch gekennzeichnet, dass**
- der Laststufenschalter ein Halbleiterstufenschalter (20) ist, der eine Taktzeit im Bereich von 20 Millisekunden aufweist.

2. Vorrichtung nach Anspruch 1, wobei
- die Steuer- und Regeleinheit (30) einen Regelalgorithmus umfasst, mit dem eine Soll-Stellung (SSOLL) des Halbleiterstufenschalters (20) berechenbar ist, mittels der ein Stromgrenzwert (IGrenz) einstellbar ist,
- die Soll-Stellung (SSOLL) in Abhängigkeit von den Messgrößen der Sensoren (15, 16) eines jeden Strangs (7) und aus den jeweils resultierenden elektrischen Ist-Größen (Eist) der jeweilige Stromgrenzwert (IGrenz) berechenbar ist, so dass mit dem Halbleiterstufenschalter (20) auf die einer Soll-Wicklungsanzapfung (TSOLL) entsprechende Soll-Stellung (SSOLL) schaltbar ist.

3. Verfahren zur Regelung eines Lichtbogenofens (10) in der Anfangsphase eines Schmelzprozesses, umfassend die folgenden Schritte, dass
- eine Strom- und Strangspannungsmessung für einen jeden der drei Stränge (7) einer Sekundärseite (6S) eines Ofentransformators (6) durchgeführt wird;
- ausgehend von den in einer Steuer- und Regeleinheit (20) vorgegebenen Betriebsparametern mit einem Regelalgorithmus eine geeignete Soll-Außenleiterspannung (UASOLL) und eine entsprechend zugeordnete Soll-Wicklungsanzapfung (TSOLL) einer Primärseite (6P) des Ofentransformators (6) berechnet wird, damit eine Strom-Obergrenze (IMAX) eingehalten wird;
- die einzustellende Soll-Wicklungsanzapfung (TSOLL) auf der Primärseite (6P) mit einem Halbleiterstufenschalter (20) für alle Stränge (7) des Lichtbogenofens (10) symmetrisch erfolgt und der Halbleiterstufenschalter (20) auf die entsprechende Soll-Stellung (SSOLL) schaltet, wobei der Halbleiterstufenschalter eine Taktzeit im Bereich von 20 Millisekunden aufweist.

4. Verfahren nach Anspruch 3, wobei
- für jeden Strang (7) die elektrische Ist-Größe (Eist) berechnet wird,
- aus den Strängen (7) derjenige mit einem Extremum der elektrischen Ist-Größe (EEXTREM) ausgewählt wird,
- anschließend verglichen wird, ob das Extremum der elektrischen Ist-Größe (EEXTREM) kleiner ist als ein Grenzwert der elektrischen Ist-Größe (EGrenz).

5. Verfahren nach den Ansprüchen 3 bis 4, wobei die elektrische Ist-Größe (Eist) eine Impedanz (Z) oder eine Admittanz (Y) ist.

6. Verfahren nach den Ansprüchen 3 bis 5, wobei eine Taktzeit für die Bestimmung der Soll-Stellung (SSOLL) des Halbleiterstufenschalters (20) und der entsprechenden Schaltung auf die Soll-Wicklungsanzapfung (TSOLL) im Bereich von 20 ms liegt.

7. Verfahren nach Anspruch 3, wobei zur Bestimmung der elektrischen Größen eine an eine Regeldynamik angepasste Tiefpassfilterung durgeführt wird.

8. Verfahren nach den Ansprüchen 3 bis 7, wobei die Anpassung der Außenleiterspannungen auf der Sekundärseite (6S) asymmetrisch durchgeführt wird.

## Claims

1. A device for regulating an electric arc furnace (10) in the initial phase of a smelting process, the device comprising
- three lines (7) with one electrode (4) each and an assigned phase conductor (5) for electrical energy supply, wherein a sensor (16) for measuring the present voltage and a sensor (15) for measuring the presently flowing current are provided in each line (7);
- a control and regulating unit (30), by means of which an electrical actual value (Eist) is time-dependently calculable for each line (7);
- at least one furnace transformer (6) with a primary side (6P) and a secondary side (6S);
- at least one on-load tap changer (20), which switches winding taps (TS1, ..., TSN) of the primary side (6P), wherein the three electrodes (4) are electrically connected to the secondary side (6S),
**characterised in that**
- the on-load tap changer is a semiconductor tap changer (20) having a cycle time in the range of 20 milliseconds.

2. The device according to claim 1, wherein
- the control and regulating unit (30) comprises a regulation algorithm, with a target position (SSOLL) of the semiconductor tap changer (20) being calculable with the regulation algorithm, by means of which target position (SSOLL) a current limit value (IGrenz) is adjustable;
- the particular current limit value (IGrenz) is calculable in dependence on the measurands of the sensors (15, 16) of each of the lines (7) and from the electrical actual values (Eist) resulting in each case such that it is possible to switch to a target position (SSOLL) corresponding to a target winding tap (TSOLL) by means of the semiconductor tap changer (20).

3. A method for regulating an electric arc furnace (10) in the initial phase of a smelting process, the method comprising the following steps that
- a current measurement and a line voltage measurement is carried out for each of the three lines (7) of a secondary side (6S) of a furnace transformer (6);
- a suitable target phase voltage (UASOLL) and a correspondingly assigned target winding tap (TSOLL) of a primary side (6P) of the furnace transformer (6) are calculated with a regulation algorithm and based on the operating parameters specified in a control and regulating unit (20) so that a current upper limit (IMAX) is adhered to;
- the adjustment of the target winding tap (TSOLL) to be adjusted, which target winding tap (TSOLL) is on the primary side (6P), is carried out symmetrically for all lines (7) of the electric arc furnace (10), and the semiconductor tap changer (20) switches to the corresponding target position (SSOLL).

4. The method according to claim 3, wherein
- the electrical actual value (Eist) is calculated for each line (7);
- the appropriate line (7) having an extreme value for the electrical actual value (EEXTREM) is selected from among the lines (7);
- a comparison is subsequently conducted, whether the extreme value of the electrical actual value (EEXTREM) is below a limit value for the electrical actual value (EGrenz).

5. The method according to the claims 3 to 4 wherein, the electrical actual quantity (Eist) is an impedance (Z) or an admittance (Y).

6. The method according to the claims 3 to 5, wherein a cycle time for determining the target position (SSOLL) of the semiconductor tap changer (20) and the corresponding switching to the target winding tap (TSOLL) is in the range of 20 milliseconds.

7. The method according to claim 3, wherein a low-pass filtering that is adjusted to a control dynamics is carried out for determining the electrical values.

8. The method according to claims 3 to 7, wherein the adjustment of the phase voltages on the secondary side (6S) is carried out asymmetrically.

## Revendications

1. Dispositif de régulation d'un four à arc électrique (10) dans la phase initiale d'un processus de fusion comprenant
- trois lignes (7) avec chacune une électrode (4) et une ligne extérieure (5) associée, pour l'alimentation électrique en énergie, un capteur (16) étant prévu dans chaque ligne (7) pour mesurer la tension actuelle et un capteur (15) pour mesurer l'intensité actuelle du courant,
- une unité de commande et de régulation (30) pour calculer pour chaque ligne (7), une grandeur réelle électrique (Eist) dépendant du temps,
- au moins un transformateur de four (6) avec un côté primaire (6P) et un côté secondaire (6S),
- au moins un changeur de prises en charge (20) qui commute les prises d'enroulement (TS1, ... TSN) du côté primaire (6P), les trois électrodes (4) étant reliées électriquement au secondaire (6S),
dispositif **caractérisé en ce que**
le changeur de prises en charge est un changeur de prises semi-conducteur (20) qui a une cadence de l'ordre de 20 ms.

2. Dispositif selon la revendication 1,
dans lequel
- l'unité de commande et de régulation (30) a un algorithme de régulation avec lequel on calcule une position de consigne (SSOLL) du changeur de prises semi-conducteur (20) avec laquelle on règle la valeur limite d'intensité (IGrenz),
- on calcule la position de consigne (SSOLL) en fonction des grandeurs de mesure fournies par les capteurs (15, 16) de chaque ligne 7 et à partir desquelles on calcule les grandeurs électriques réelles résultantes (Eist) de chaque valeur limite d'intensité (IGrenz), de façon à commuter avec le changeur de prises semi-conducteur (20) sur la position de consigne SSOLL) correspondant à la prise d'enroulement de consigne (TSOLL).

3. Procédé de régulation d'un four à arc électrique (10) dans la phase initiale d'un processus de fusion comprenant les étapes suivantes consistant à
- faire une mesure d'intensité et de tension pour chacune des trois lignes (7) du côté secondaire (6S) d'un transformateur de four (6),
- calculer à partir de paramètres de fonctionnement prédéterminés dans une unité de commande et de régulation (20), avec un algorithme de régulation, une tension de consigne de ligne extérieure, appropriée (UASOLL) et une prise d'enroulement de consigne (TSOLL) associée, correspondante du côté primaire (6P) du transformateur de four (6), pour respecter la limite supérieure d'intensité (IMAX),
- la prise d'enroulement de consigne à régler (TSOLL) sur le côté primaire (6P) se faisant avec un changeur de prises semi-conducteur (20) pour toutes les lignes (7) du four à arc électrique (10) de manière symétrique et le changeur de prises semi-conducteur (20) commutant sur la position de consigne (SSOLL) correspondante, le changeur de prises semi-conducteur ayant une cadence de l'ordre de 20 ms.

4. Procédé selon la revendication 3,
selon lequel
- pour chaque ligne (7) on calcule la grandeur électrique réelle (Eist),
- à partir des lignes (7) on sélectionne celles correspondant à l'extrémum de la grandeur électrique réelle (EEXTREM),
- ensuite on compare si l'extrémum de la grandeur électrique réelle (EEXTREM) est inférieure à la valeur limite de la grandeur réelle électrique (EGrenz).

5. Procédé selon les revendications 3 et 4,
selon lequel
la grandeur électrique réelle (Eist) est une impédance (Z) ou une admittance (Y).

6. Procédé selon les revendications 3 à 5,
selon lequel la cadence pour déterminer la position de consigne (SSOLL) du changeur de prise semi-conducteur (20) et la commutation correspondante sur la prise d'enroulement de consigne (TSOLL) est de l'ordre de 20 ms.

7. Procédé selon la revendication 3,
selon lequel pour déterminer les grandeurs électriques on applique un filtrage passe-bas adapté à la dynamique de régulation.

8. Procédé selon les revendications 3 à 7,
selon lequel on adapte les tensions des lignes extérieures du côté secondaire (6S) de manière asymétrique.
